# EUROPÄISCHE PATENTSCHRIFT

(11) **EP 3 469 227 B1**
(45) Veröffentlichungstag und Bekanntmachung des Hinweises auf die Patenterteilung: **28.04.2021**
(21) Anmeldenummer: 17743245.7
(22) Anmeldetag: 08.06.2017
(51) Int. Cl.: F16D 65/00

(54) **FANGBACKE FÜR ARRETIERVORRICHTUNG FÜR DREH- UND/ODER VERSCHIEBBAR ANGEORDNETE BAUTEILE UND ARRETIERVORRICHTUNG**
CLAMPING JAW FOR A LOCKING DEVICE FOR COMPONENTS WHICH ARE ARRANGED IN A ROTATABLE AND/OR DISPLACEABLE MANNER, AND LOCKING DEVICE
MÂCHOIRE D'ARRÊT POUR DISPOSITIF DE BLOCAGE D'ÉLÉMENTS AGENCÉS ROTATIFS ET/OU DÉPLAÇABLES ET DISPOSITIF DE BLOCAGE

(30) Priorität: 09.06.2016 DE 102016007070; 03.04.2017 DE 102017107095
(43) Veröffentlichungstag der Anmeldung: 17.04.2019
(73) Patentinhaber: Bischoff Industriebremsen GmbH, 39418 Staßfurt (DE)
(72) Erfinder: POLACK, Hans-Joachim, 39418 Staßfurt / Ortsteil Neundorf (DE); BISCHOFF, Hartmut, 39418 Staßfurt (DE)
(74) Vertreter: Patentanwälte Schuster, Müller & Partner mbB
(86) Internationale Anmeldenummer: PCT/DE2017/100479
(87) Internationale Veröffentlichungsnummer: WO 2017/211354

(56) Entgegenhaltungen:
- WO-A1-2016/020820
- DE-A1-102013 216 410
- JP-A- 2002 127 982
- JP-A- 2007 119 177
- JP-A- 2013 127 303
- US-A- 5 816 901

## Beschreibung

### Stand der Technik

Die Erfindung geht aus von einer Arretiervorrichtung für dreh- und/oder verschiebbar angeordnete Bauteile, nach der Gattung des Oberbegriffs der Ansprüche 1, 8, 17, 18 oder 21.

Im Unterschied zu Bremsbacken haben Fangbacken von Arretiervorrichtungen die vorrangige Aufgabe, rotierende oder linear bewegende Bauteile in bestimmten Positionen gegen von außen einwirkende Kräfte sicher zu arretieren oder bei Versagen ihrer Betriebsbremsen in kürzester Zeit zum Stillstand zu bringen. Deshalb muss ihre Bremsfläche einen hohen Reibungskoeffizienten besitzen, und/oder sie müssen von Aktuatoren mit einer hohen Anpresskraft gegen die Bremsschiene oder den Bremsring des Bremssystems gedrückt werden. Eine spezielle Anwendung derartiger Fangbacken erfolgt in Bremssystemen für horizontalachsige Windenergieanlagen. Bei großen Windlasten, wie sie bei Stürmen auftreten, werden die Rotorblätter der Windenergieanlagen und/oder die Gondel bzw. Kanzel aus dem Wind gedreht, damit keine Beschädigung der Anlagen durch eine Überlastung auftritt. Die wirksame Angriffsfläche der Rotorblätter ist über Stellantriebe in den oder aus dem Wind drehbar. Ihre jeweilige Stellung wird mittels sog. Pitchbremsen gesichert. Die Rotation der Gondel bzw. Kanzel der Windenergieanlage erfolgt sehr präzise über ein Azimutlager. Nachdem die Gondel aus dem Wind gedreht ist, muss sie in dieser Position arretiert werden. Ebenso muss eine Arretierung erfolgen, wenn die Gondel wieder in den Wind gedreht ist, um in dieser strömungstechnisch optimalen Position eine hohe Stromausbeute zu erzielen. Diese Arretierung erfolgt jeweils durch Bremsen bzw. Fangbacken, sog. Azimutbremsen, die vom Aufbau her ähnlich einer Scheibenbremse von Fahrzeugen sind. Diese Azimutbremsen weisen einen Bremssattel ähnlich einer Fahrzeugbremse auf. Der Bremssattel besteht in der Regel aus zwei Bremsbacken, zwischen denen der Bremsring verläuft. Die Bremsbacke selbst besteht aus einer Trägerplatte, auf der ein Bremsbelag befestigt ist. Die Bremskraft wird von einem Aktuator, beispielsweise einem Elektromagneten oder einer Feder über den Bremssattel auf die Bremsbacken aufgebracht, die sich dadurch aufeinander zubewegen und dabei den Bremsring einklemmen und arretieren (EP 2 354 539 A1, EP 1 571 334 A1 und EP 1 939 446 A2).

Der Nachteil sowohl der Pitchbremsen als auch der Azimutbremsen besteht darin, dass die für derartige Bremsen verwendeten Bremsbeläge lediglich einen Reibungskoeffizienten von 0,6 aufweisen. Dieser Wert reduziert sich jedoch bei verschmutzten oder verölten Bremspartnern und ist zudem temperaturabhängig, wobei er mit niedriger werdenden Temperaturen sinkt. Dieser Nachteil kann zwar durch höhere Anpresskräfte ausgeglichen werden, was jedoch stärkere und damit auch kostenintensivere Aktuatoren erfordert. Des Weiteren ist durch den geringen Reibungskoeffizienten insbesondere bei Azimutbremsen eine hohe Anzahl von Fangbacken notwendig, wodurch die Herstellungskosten und der Wartungsaufwand des Bremssystems steigen und das Gewicht der Gondel zunimmt.

Die häufigste Art des physikalischen Wirkprinzips bei Bremsen ist der Reibschluss. Zur Erhöhung der Wirksamkeit eines solchen Reibschlusses, sind die Eingriffsflächen der Bremsbacken oder -keile mit ihre Oberflächenrauigkeit vergrößernden Mitteln, beispielsweise einem Zahnprofil oder Schneiden, versehen, das bzw. die sich in die Oberfläche des Gegenparts einschneiden (DD 127 823 A1, DE 25 00 859 B2). Die Anwendung derartiger, im Querschnitt ein Sägezahnprofil aufweisenden Bremsbacken oder -keile ist jedoch auf Fang- und Sicherheitssysteme von Personen- und Lastenaufzügen, Regalbediensystemen oder auf Kletterhubwerke begrenzt, wo sie als Fang- oder Haltebacken dienen. Bei diesen Anwendungen wird keine hohe Genauigkeit an die Position der zu arretierenden Bauteile gestellt. Vielmehr kommt es auf eine Arretierung in kürzester Zeit bzw. innerhalb geringer Fallhöhen an. Zudem sind bei den Fangbremsen der genannten Personen- und Lastenaufzüge, Regalbediensysteme oder Kletterhubwerke aufgrund der bezüglich der Richtung immer gleichen Bremssituation die Bremsrichtung und damit die Richtung der wirkenden Kräfte immer gleich. Im Unterschied dazu müssen Bremssysteme von Windenergieanlagen die Rotorblätter und/oder die Gondel in Abhängigkeit von der Windrichtung winkelgenau fixieren, um bei Sturm dem Wind die geringstmögliche Angriffsfläche zu bieten und bei zulässigen Windverhältnissen die Rotorblätter und/oder die Gondel exakt in der Position zu arretieren, die eine optimale Ausnutzung der Windenergie ermöglicht, was mit den herkömmlichen Bremsen und Fangbacken nicht möglich ist.

Bekannt ist ferner eine Bremsbacke für Fahrräder, wobei die Bremsbacke feststehend ist und beim Bremsen auf die rotierende Felge wirkt. Das Bremsprofil der Bremsbacke weist unterschiedliche Geometrien auf. Eine Ausführungsform offenbart ein Bremsprofil mit Nuten, die quer zur Bewegungsrichtung verlaufen. Bei einer weiteren Ausführungsform besteht das Bremsprofil aus Schneiden, die im Querschnitt gleichschenklige Dreiecke darstellen, wobei die Schneiden quer zur Bewegung der Felge verlaufen (JP 2002 127982 A).

Der Erfindung liegt somit die Aufgabe zugrunde, eine Arretiervorrichtung für dreh- und/oder verschiebbar angeordnete Bauteile zu entwickeln, deren Fangbacken einen hohen und von Umwelteinflüssen weitgehend unabhängigen Reibungskoeffizient aufweisen, um auch bei extrem hohen, aus unterschiedlichen und häufig wechselnden Richtungen auf die Bauteile wirkenden Kräften eine sichere winkelgenaue Arretierung der Bauteile zu gewährleisten.

Eine zusätzliche Aufgabe der Erfindung besteht in der Entwicklung einer sicheren Arretiervorrichtung für dreh- und/oder verschiebbar angeordnete Bauteile, die auch bei extrem hohen, aus unterschiedlichen und häufig wechselnden Richtungen auf die Bauteile wirkenden Kräften eine sichere winkelgenaue Arretierung der Bauteile gewährleistet.

### Die Erfindung und ihre Vorteile

Die erfindungsgemäße Arretiervorrichtung mit dem kennzeichnenden Merkmal der Ansprüche 1 oder 8 hat gegenüber herkömmlichen Fangbacken, auch gegenüber jenen, die bereits Schneiden auf ihrer Bremsfläche aufweisen, einen deutlich erhöhten Reibungskoeffizienten. Dadurch ermöglicht sie auch bei sehr großen Bauteilen, die hinsichtlich ihres Aufbaus, ihrer Größe und Masse bereits als Aggregate einzustufen sind, auch bei aus unterschiedlichen und häufig wechselnden Richtungen angreifenden extrem hohen Kräften eine dauerhaft zuverlässige und winkelgenaue Arretierung.

Das wird erfindungsgemäß entsprechend der kennzeichnenden Merkmale der Ansprüche 1 oder 8 zum einen durch eine besondere Gestaltung der die Bremswirkung erzielenden Mittel der Bremsfläche der Fangbacke, die unmittelbar mit dem Bremspartner, nämlich mit der Bremsschiene, in Kontakt gelangen, oder durch eine besondere Anordnung dieser Mittel auf der Bremsfläche der Fangbacke bzw. der Fangbacken erreicht. Bei bestimmten Ausgestaltungen der Merkmale der o. g. Ansprüche ist auch eine Kombination beider Varianten möglich.

Bei der Variante der kennzeichnenden Merkmale des Anspruchs 1 weist der in die Bremsschiene eingreifende keilförmige Teil der Schneiden einen senkrecht zur Bremsfläche der Fangbacke verlaufenden Schenkel auf. Bei der Montage der Fangbacke in einer Brems- oder Arretiereinrichtung ist dieser Schenkel immer entgegen der Richtung der auf die Scheiden der Fangbacke einwirkenden Kräfte ausgerichtet. Da die auf die Schneiden einwirkenden Kräfte zwar immer über das zu arretierende Bauteil selbst auf die Brems- oder Arretiervorrichtung übertragen werden, die Anordnung von Fangbacken und Bremsschiene innerhalb der Arretiervorrichtung jedoch unterschiedlich sein kann, muss sich die Ausrichtung des senkrecht zur Bremsfläche der Fangbacke verlaufenden Schenkels nach diesen unterschiedlichen Anordnungen richten. Bei bezüglich der Bewegung des Bauteils feststehender Fangbacke oder feststehenden Fangbacken ist also die Bremsschiene mit dem Bauteil fest verbunden und bewegt sich mit diesem. In dem Fall ist der senkrechte Schenkel der Schneiden jeweils der Bewegung des Bauteils und damit der mit diesem fest verbundenen Bremsschiene entgegengerichtet. Im andern Fall, wenn also die Bremsschiene feststehend ist, während die Fangbacke oder Fangbacken mit dem sich bewegenden Bauteil fest verbunden sind, weist der senkrechte Schenkel der Schneiden jeweils in Richtung der Bewegung des Bauteils. Bei einer drehenden Bewegung des Bauteils ist die Bremsschiene ringförmig ausgebildet und wird nachfolgend gleichberechtigt in Funktion und Wirkung auch als Bremsring bezeichnet. Der Wortbestandteil "Brems-" in diesen beiden Begriffen ist hier nicht wortsinngemäß tatsächlich als Bestandteil einer Bremse anzusehen, sondern als Bestandteil der Arretiervorrichtung, zu der auch die Fangbacke gehört und bei der das bewegte Bauteil nicht nur aus seiner Bewegung abgebremst, sondern auch in der gewünschten Position arretiert wird.

Die gleiche oder zumindest eine ähnlich gute Arretierungswirkung wird gemäß der kennzeichnenden Merkmale des Anspruchs 8 dadurch erreicht, dass die auf der Bremsfläche der Fangbacke in Bremsrichtung hintereinander angeordneten im Querschnitt keilförmigen Schneiden V-förmig, oder anders ausgedrückt, in der Art von Fischgräten, angeordnet sind. Die V-förmige Anordnung der keilförmigen Schneiden bewirkt eine Verlängerung ihrer wirksamen Länge, also des Teils der Bremsfläche, der mit der Bremsschiene in Wirkverbindung gelangt bzw. während der Arretierung in Wirkverbindung verbleibt.

Die gleiche oder zumindest eine ähnlich gute Arretierungswirkung wie zuvor beschrieben wird dadurch erreicht, dass das im Wesentlichen quer zur Richtung der Bewegung des Bauteils verlaufende Bremsprofil aus mehreren in Bremsrichtung hintereinander angeordneten zylinderabschnittsförmigen Bremswulsten besteht, die wulstartig aus der Bremsfläche der Fangbacke hervortreten. Unter dem Begriff "Zylinderabschnitt" ist hier ein Körper zu verstehen, der durch einen Längsschnitt in oder parallel zur Zylinderachse entsteht. Die Querschnittsform eines solchen Bremsprofils besteht, ähnlich einer Sinuskurve, aus aneinander gereihten Vertiefungen und Erhebungen, die die Bremswulste bilden. Bei einer Variation dieser Ausgestaltung sind die Täler der Sinuskurvenstruktur durch einen Berg ersetzt, sodass nur noch Sinusberge (Bremswulste) nebeneinander liegen. Im Unterschied zu den o. g. Schneiden mit ihrem keilförmigen Eingriffsbereich in die Bremsschiene ist der beim Arretiervorgang mit der Bremsschiene in Kontakt kommende Bereich der zylinderabschnittsförmigen Bremswulste abgerundet. Das hat den Vorteil, dass die Flächenpressung erhöht wird und keine Scherung an der Oberfläche der Bremsschiene auftritt. Voraussetzung dafür ist, dass der Bremsring aus einem weicheren Material als die Bremswulste besteht. Ein weiterer Vorteil besteht darin, dass die im Querschnitt abgerundeten zylinderabschnittsförmigen Bremswulste keine scharfen Einschnitte in der Bremsschiene hinterlassen, von denen eine Kerbwirkung ausgeht, so dass dadurch Rissinduktionsstellen vermieden werden. Außerdem ist der Verschleiß eines abgerundeten Eingriffsbereichs des Bremsprofils geringer als der von keilförmigen Schneiden. Somit bietet diese erfindungsgemäße Variante der Fangbacke eine höhere Lebensdauer für die Bremsschiene bzw. den Bremsring.

Wenn man davon ausgeht, dass die Seite der keilförmigen Schneiden, auf der sich der senkrechte Schenkels befindet, eine stärkere Arretierungswirkung hat als die Seite mit dem schrägen Schenkel und die offene Seite des V's der V-förmig angeordneten keilförmigen Schneiden eine stärkere Arretierungswirkung hat als die Spitze des V's, sollte bei dieser Gestaltung bzw. Anordnung der keilförmigen Schneiden die Ausrichtung der keilförmigen Schneiden bzw. der V's in Abhängigkeit von der Anordnung der Fangbacken in der Arretiervorrichtung sowie der Bremsschiene berücksichtigt werden. Bezüglich des senkrechten Schenkels der keilförmigen Schneiden wurde die Ausrichtung der keilförmigen Schneiden bereits in den Erläuterungen zu Anspruch 1 beschrieben.

Genauso verhält es sich mit der Ausrichtung der Spitze des V's, also des Punktes, an dem die auf der oder den Fangbacken hintereinander angeordneten keilförmigen Schneiden oder zylinderabschnittsförmigen Bremswulste zusammenstoßen. Bei bezüglich der Bewegung des Bauteils feststehender Fangbacke oder feststehenden Fangbacken muss die Spitze in Richtung der Bewegung des Bauteils weisen, so dass die Öffnung des V's der Richtung der unerwünschten Bewegung des Bauteils entgegensteht. Im anderen Fall, wenn die Fangbacke oder die Fangbacken an dem sich bewegenden Bauteil befestigt sind und die Bremsschiene feststehend ist, ist die Spitze des V's der Bewegung des Bauteils entgegengerichtet.

Folglich müssen Fangbacken mit einem solchen einseitig ausgerichteten Bremsprofil zum Arretieren von dreh- und/oder verschiebbar angeordneten Bauteilen, die sich in entgegengesetzten Richtungen bewegen, in einer Arretiervorrichtung immer paarweise, und zwar mit entgegengesetzter Orientierung des senkrechten Schenkels der keilförmigen Schneiden bzw. der Spitze der V's, eingesetzt werden, um in beiden Bewegungsrichtungen der Bauteile eine größtmögliche Bremswirkung zu erzielen.

Eine Kombination dieser beiden Merkmale in dem Bremsprofil einer Fangbacke dürfte eine besonders starke Brems- und Arretierungswirkung zeigen. Bei dieser Kombination ist also der senkrechte Schenkel der keilförmigen Schneiden auf der Seite der keilförmigen Schneiden angeordnet, die die offene Seite des V's der V-förmig angeordneten keilförmigen Schneiden bildet, oder anders ausgedrückt, die Seite der V-förmig angeordneten Schneiden, auf der sich der senkrechte Schenkel befindet, bildet die offene Seite des V's.

Es ist aber auch möglich, die in entgegengesetzten Richtungen arretierenden keilförmigen Schneiden oder zylinderabschnittsförmigen Bremswulste auf ein und derselben Fangbacke in entgegengesetzter Ausrichtung anzuordnen. Dies betrifft alle drei o. g. Varianten der Verstärkung der Arretierungswirkung, also die keilförmigen Schneiden mit einem senkrechten Schenkel, die V-förmig angeordneten keilförmigen Schneiden und die Kombination aus beiden. In allen drei Varianten hat jeweils eine Teilanzahl der hintereinanderliegenden keilförmigen Schneiden oder zylinderabschnittsförmigen Bremswulste eine verstärkt arretierende Wirkung jeweils in eine Richtung und die andere Teilanzahl der hintereinanderliegenden keilförmigen Schneiden oder zylinderabschnittsförmigen Bremswulste jeweils in die entgegengesetzte Richtung. Vorteilhafterweise ist die jeweilige Teilanzahl der keilförmigen Schneiden oder zylinderabschnittsförmigen Bremswulste gleich groß, so dass der Reibungskoeffizient einer Fangbacke in jeder der Bewegungsrichtungen des Bauteils gleich ist. Derart ausgeführte Fangbacken haben den Vorteil, dass sie auch in ungerader Anzahl an Arretiervorrichtungen für drehbar gelagerter Bauteile, beispielsweise Gondeln von Windenergieanlagen, angeordnet sein können, während Fangbacken mit lediglich in einer Richtung wirkenden keilförmigen Schneiden oder zylinderabschnittsförmigen Bremswulste wegen der erforderlichen Aufbringung der Arretierkräfte auf den Bremsring in beide Bewegungsrichtungen der Bauteile immer paarweise angeordnet sein müssen.

In einer anderweitig vorteilhaften Ausgestaltung der Erfindung sind die keilförmigen Schneiden aus einer Vielzahl von einzelnen Teilschneiden gebildet, um bei den Fangbacken eine Gewichtsersparnis zu erreichen.

Nach einer anderweitig vorteilhaften Ausgestaltung der Erfindung sind die keilförmigen Schneiden in der Fangbacke längs verschiebbar angeordnet. Dadurch sind sie innerhalb der Fangbacke versenkbar. Zusätzlich weist die Fangbacke Mittel zum Sperren der Längsverschiebbarkeit der keilförmigen Schneiden auf, um die Versenkung gezielt ermöglichen oder verhindern zu können. Das hat den Vorteil, dass für die Arretierung nicht wirksame keilförmige Schneiden durch den vom Aktuator auf die Fangbacken aufgebrachten Druck in die Fangbacke oder Fangbacken eingeschoben werden können und daher nicht mit in die Oberfläche der Bremsschiene eingreifen müssen. Dadurch werden sie vor Verschleiß geschont, und die von den Aktuatoren aufgebrachten Kräfte können voll und ganz auf die für die Arretierung wirksamen keilförmigen Schneiden aufgebracht werden, wodurch die Arretierungswirkung dieser Bremsbacken erhöht wird.

Um den Verschleiß der keilförmigen Schneiden der Fangbacke auch ohne deren längsverschiebbare Anordnung in der Fangbacke zu minimieren, bestehen die keilförmigen Schneiden in einer vorteilhaften Ausführung der Erfindung aus gehärtetem Stahl.

Vorteilhaft ist es auch, die Fangbacke zweiteilig aufzubauen. In dem Fall besteht sie aus einer Trägerplatte, auf der die Bremsfläche mit den keilförmigen Schneiden oder zylinderabschnittsförmigen Bremswulsten befestigt ist. Dann lässt es sich auch, wie zuvor beschrieben, auf einfache Weise umsetzen, lediglich die Bremsfläche mit den keilförmigen Schneiden oder zylinderabschnittsförmigen Bremswulsten aus einem verschleißfesteren Werkstoff herzustellen und für die Trägerplatte einen preisgünstigeren Werkstoff, beispielsweise einen Baustahl zu verwenden.

Nach einer anderweitigen vorteilhaften Ausgestaltung der Erfindung ist an den Längskanten der Fangbacke, an denen die keilförmigen Schneiden oder zylinderabschnittsförmigen Bremswulste auslaufen, jeweils eine Gleitleiste in ihrer Höhe federnd gelagert angeordnet. Mit ihrer oberen, freien Fläche liegen die Gleitleisten infolge des Federdrucks auch dann an der Bremsschiene an, wenn das Bauteil funktionsbedingt bewegt wird, die Fangbacke sich also nicht im Eingriff mit der Bremsschiene befindet. Die Höhe der Gleitleisten ist so bemessen, dass sie in ihrer durch die Federkraft eingenommenen von der Fangbacke abgehobenen Position minimal über die freie Kante der keilförmigen Schneiden oder zylinderabschnittsförmigen Bremswulste überstehen und sich zwischen ihrer Unterseite und der Fangbacke ein Spalt herausbildet, dessen sich in Richtung der Höhe der Fangbacke erstrechende Dicke die Bewegungsfreiheit der Gleitleiste bestimmt. Diese Bewegungsfreiheit der Gleitleiste, die auch als Höhenspiel bezeichnet werden kann, richtet sich nach den konstruktiven Gegebenheiten der Anwendung, insbesondere der fertigungsbedingten und/oder ausdehnungsbedingten Abweichungen der Bremsschiene oder des Bremsrings von einer idealen Ebene sowie dem Spiel zwischen feststehendem und bewegtem Bauteil.

Die abgerundeten zylinderabschnittsförmigen Bremswulste können ebenso wie die oben beschriebenen keilförmigen Schneiden des Bremsprofils V-förmig auf der Fangbacke angeordnet sein. Auch für die Ausrichtung der Spitze des V's bezüglich der festen oder beweglichen Anordnung der Fangbacke gilt das bereits bei der Erläuterung der unterschiedlichen Arretierungswirkung bei unterschiedlicher Orientierung der V-förmig angeordneten Schneiden Gesagte. So können auf der Bremsfläche einer einzigen Fangbacke die zylinderabschnittsförmigen Bremswulste mit entgegen gerichteter Anordnung der Spitze des V's vorgesehen sein, um mit einer Fangbacke eine hohe Arretierungswirkung in beide Richtungen der Bewegung des Bauteils zu erzielen. An den mit zylinderabschnittsförmigen Bremswulsten versehenen Fangbacken können auch die oben bereits beschriebenen federnd gelagerten Gleitleisten angeordnet sein.

Die erfindungsgemäße Arretiervorrichtung mit den kennzeichnenden Merkmalen der Ansprüche 17 oder 18 hat den Vorteil, dass die Arretiervorrichtung selbst sich in ihrem Aufbau und ihrer Größe so gut wie nicht von herkömmlichen Arretiervorrichtungen unterscheidet und die von den Aktuatoren zur Arretierung aufzubringende Haltekraft eher noch geringer sein kann als bei Arretiervorrichtungen mit herkömmlichen Brems- bzw. Fangbacken.

Die Arretiervorrichtungen können mindestens zwei in Richtung der Bewegung der Bauteile hintereinander angeordnete Fangbacken aufweisen. In dem Fall müssen die mindestens zwei Fangbacken mit den Merkmalen einer der Ansprüche 1, 3 bis 7 oder 8, 9, 11 bis 16 versehen und so angeordnet sein, dass das oder die die arretierende Wirkung bestimmenden Merkmale ihres Bremsprofils jeweils in entgegengesetzter Richtung ausgebildet sind, so dass die mindestens eine Fangbacke in die eine Richtung der Bewegung des Bauteils und die mindestens zweite Fangbacke in die entgegengesetzte Richtung der Bewegung des Bauteils wirkt.

Mindestens eine Fangbacke ist in einer Arretiervorrichtung ausreichend, wenn die Fangbacke Merkmale von den Ansprüchen 1 und 2 oder 8 und 10 aufweist. Bei dieser mindestens einen Fangbacke sind die die Arretierung bewirkenden Mittel, nämlich die keilförmigen Schneiden oder zylinderabschnittsförmigen Bremswulste, jeweils hälftig in einander entgegengesetzt wirksamen Richtungen angeordnet, so dass eine Fangbacke in beiden Bewegungsrichtungen des Bauteils eine gleich hohe Arretierungswirkung besitzt.

Nach einer zusätzlichen vorteilhaften Ausgestaltung der Erfindung besteht die Bremsschiene aus einem weicheren Material als dem der keilförmigen Schneiden der Fangbacke, beispielsweise aus einem Knetmetall, wie Aluminium, während die Schneiden aus Stahl oder gehärtetem Stahl bestehen. Dadurch können die keilförmigen Schneiden der Bremsbacke leichter in die Bremsschiene eindringen und so einen Formschluss herstellen, was wesentlich mit zur Erzielung des erforderlichen hohen Reibungskoeffizienten beiträgt. Außerdem werden durch solche Werkstoffkombinationen zwischen Bremsschiene und Bremsfläche der Fangbacke die Bremsflächen vor einem frühzeitigen Verschleiß geschützt, so dass sie eine hohe Lebensdauer besitzen und die Arretiervorrichtung einen geringeren Wartungsaufwand erfordert. Die keilförmigen Schneiden hinterlassen lediglich dünne längliche Querabdrücke in der Bremsschiene. Aufgrund der Größe beispielsweise eines Bremsrings einer Windenergieanlage, der einen Umfang von bis zu 20 m hat, dürften diese Querabdrücke die Funktionsfähigkeit der Arretiervorrichtung nicht beeinträchtigen.

Bei Fangbacken, deren Bremsfläche zylinderabschnittsförmige Bremswulste aufweisen, wird das weichere Material der Bremsschiene beim Arretiervorgang geringfügig plastisch verformt, wodurch der erforderliche hohe Reibungskoeffizient erreicht wird.

Für bestimmte Anwendungsfälle kann es von Vorteil sein, nicht die Fangbacken der Arretierungsvorrichtung mit den den Reibungskoeffizienten erhöhenden Mitteln zu versehen, sondern die Bremsschiene bzw. den Bremsring. Deshalb ist in einer zusätzlichen Ausführung einer Arretierungsvorrichtung mit den kennzeichnenden Merkmalen des Anspruchs 21 vorgesehen, die Bremsschiene mit keilförmigen Schneiden oder zylinderabschnittsförmigen Bremswulsten gemäß der kennzeichnenden Merkmale der Ansprüche 1 oder 8 auszurüsten. Auch die vorteilhaften Ausgestaltungen der Fangbacken gemäß der diesen Ansprüchen zugeordneten Unteransprüche sind auf eine Bremsschiene bzw. einen Bremsring übertragbar. Bei einer lediglich in einer Bewegungsrichtung arretierenden Vorrichtung ist dabei jedoch zu berücksichtigen, dass sich die Arretierungswirkung bezüglich der Ausrichtung und/oder Anordnung der keilförmigen Schneiden oder zylinderabschnittsförmigen Bremswulste umkehrt, d. h., dass das Merkmal, das die stärkere Arretierungswirkung hervorruft, genau in die entgegengesetzte Richtung zu den in Anspruch 1 sowie den Unteransprüchen 2, 9, 11 genannten Richtungen ausgerichtet sein muss.

Da jedoch Arretierungsvorrichtungen in der Regel sich in entgegengesetzten Richtungen bewegende Bauteile arretieren müssen, werden die Bremsflächen der Bremsschiene bzw. des Bremsring in Teilbereiche mit in entgegengesetzten Richtungen verstärkt wirkenden Bremsprofilen aufgeteilt, wobei eine Teilzahl der die verstärkte Arretierungswirkung hervorrufenden Mittel in die eine Richtung und die andere Teilzahl dieser Mittel in die entgegengesetzte Richtung ausgerichtet ist. Dabei versteht es sich von selbst, dass jedem Bremsprofil auf der Bremsschiene bzw. dem Bremsring jeweils mindestens eine Fangbacke gegenüberliegend angeordnet sein muss. Von Vorteil ist, dass die Bremsflächen dieser Fangbacken einheitlich gestaltet sein können und deshalb weder die Anordnung als bewegtes oder feststehendes Teil der Arretiervorrichtung noch die Ausrichtung der Fangbacken bezüglich der Bewegungsrichtung des Bauteils berücksichtigt werden muss. Dadurch werden Montagefehler durch falsch montierte Fangbacken vermieden.

In einer zusätzlichen vorteilhaften Ausgestaltung der Erfindung besteht die Bremsfläche der Fangbacken aus einem weicheren Material als dem der Bremsschiene bzw. des Bremsrings, wodurch der Verschleiß der Bremsschiene bzw. des Bremsrings reduziert werden. Das ist insofern von Vorteil, als dass sich die nun schneller als die Bremsschiene verschleißende Fangbacken leichter austauschen lassen als eine Bremsschiene bzw. ein Bremsring.

Weitere Vorteile und vorteilhafte Ausgestaltungen der Erfindung sind der nachfolgenden Beschreibung, der Zeichnung und den Ansprüchen entnehmbar.

### Zeichnung

Der Gegenstand der Erfindung ist in den Zeichnungen am Beispiel eines Arretiersystems mit Fangbacken für ein Azimutsystem einer Windenergieanlage dargestellt und wird im Folgenden näher erläutert. Es zeigen:
- Fig. 1: eine schematische Darstellung eines Azimutsystems einer Windenergieanlage mit erfindungsgemäßer Arretiervorrichtung,
- Fig. 2: eine Schnittdarstellung einer erfindungsgemäßen Arretiervorrichtung,
- Fig. 3: eine Draufsicht auf die Bremsfläche einer erfindungsgemäßen Fangbacke,
- Fig. 4: eine Schnittdarstellung A-A der Fangbacke aus Fig. 3,
- Fig. 5: eine Detailansicht aus Fig. 4 einer Fangbacke,
- Fig. 6: eine Draufsicht auf die Bremsfläche einer erfindungsgemäßen Fangbacke mit längsbeweglichen Schneidbolzen,
- Fig. 7: eine Detailansicht des Querschnitts der Fangbacke aus Fig. 6,
- Fig. 8: eine Draufsicht auf die Bremsfläche einer erfindungsgemäßen Fangbacke mit einem aus zylinderabschnittsförmigen Bremswulsten bestehenden Brermsprofil und
- Fig. 9: eine Detailansicht des Querschnitts der Fangbacke aus Fig. 8.
- Fig. 10: eine schematische Darstellung einer Pitchbremse einer Windenergieanlage mit erfindungsgemäßer Arretiervorrichtung,
- Fig. 11: eine Detailansicht L aus Fig. 10 einer ersten Variante der Gestaltung der Bremsfläche des Bremsrings der Arretiervorrichtung und
- Fig. 12: eine Detailansicht L aus Fig. 10 einer zweiten Variante der Gestaltung der Bremsfläche des Bremsrings der Arretiervorrichtung.

### Beschreibung des Ausführungsbeispiels

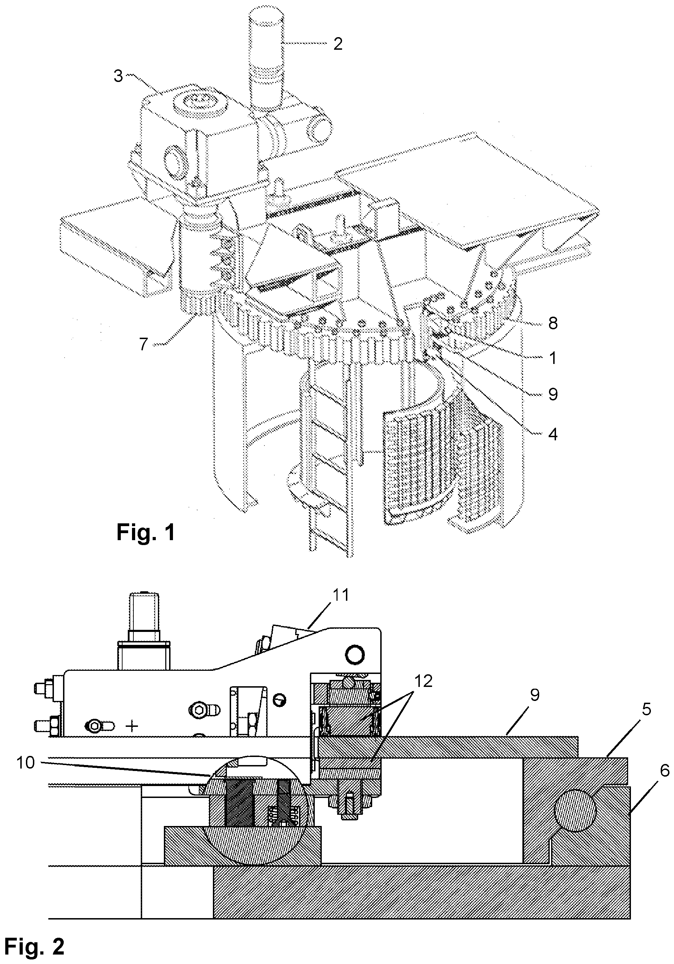

Fig. 1 zeigt schematisch ein Azimutsystem einer Windenergieanlage. Das Azimutsystem besteht aus einem Azimutlager 1, einem Azimutantrieb 2, einem Azimutgetriebe 3, einer Azimutbremse 4 und einer Azimutsteuerung. Die Azimutsteuerung erhält Wetterdaten einer an der Gondel der Windenergieanlage angeordneten Wetterstation und steuert den Azimutantrieb 2 entsprechend an, so dass die Nabe mit den Rotorblättern immer präzise im Wind steht und bei der Energieumwandlung ein optimaler Wirkungsgrad erreicht wird. Andererseits muss die Anlage bei zu hohen Windlasten aus dem Wind gedreht werden um einer Zerstörung der Anlage vorzubeugen. Durch die Lagerung der Gondel auf dem Azimutlager 1 kann diese gegenüber dem Turm der Windenergieanlage in eine horizontale Rotation versetzt werden.

Wie aus Fig. 2 erkennbar, besteht das Azimutlager 1 aus einem inneren Lagerring 5 und einem äußeren Lagerring 6, wobei der äußere Lagerring 6 mit dem Turm der Windenergieanlage fest verbunden ist. Auf dem inneren Lagerring befindet sich der gesamte Gondelaufbau mit dem Azimutantrieb 2, Azimutgetriebe 3, der Azimutbremse 4 und der Azimutsteuerung, der dadurch unabhängig vom Turm der Windenergieanlage gedreht werden kann.

Für eine Rotation der Gondel wird, ausgehend von dem Azimutantrieb 2 die Bewegung über das Azimutgetriebe 3 zu einem Ritzel 7 übertragen, welches in einen Zahnkranz 8 greift. Dadurch, dass der Zahnkranz 8 fest mit dem Turm verbunden ist, kann sich durch die Drehung des Ritzels 7 die gesamte Gondel um die eigene Achse drehen. Ist die gewünschte Position der Gondel erreicht, wird sie durch die Azimutbremse 4 arretiert, um zu gewährleisten, dass die Gondel diese Position beibehält.

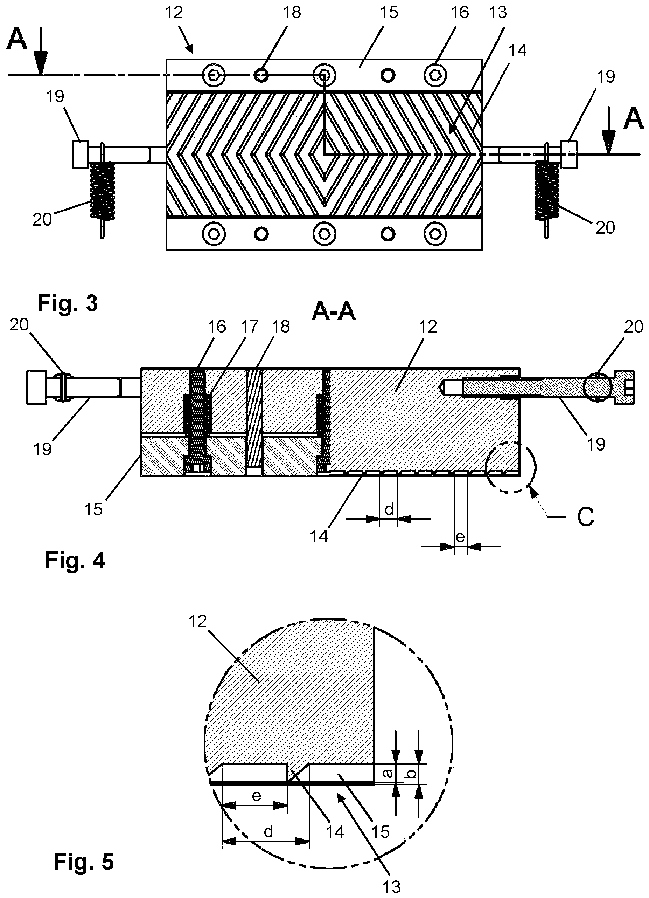

Fig. 2 zeigt eine Schnittdarstellung der Azimutbremse 4 zusammen mit einem Bremsring 9, dem Azimutlager 1, bestehend aus innerem und äußerem Lagerring 5, 6, und einer vertikal wirkenden schwimmenden Lagerung 10. Bei dem in Fig. 2 dargestellten Ausführungsbeispiel sind der Bremsring 9 und die Azimutbremse 4 im Vergleich zu der Darstellung in Fig. 1 in umgekehrter Weise verbaut. Der Bremsring 9 ist hier nicht fest mit dem Turm verbunden, sondern mit der Gondel und die Azimutbremse 4 ist über die schwimmende Lagerung 10 drehfest mit dem Turm verbunden. Die Azimutbremse 4 verfügt über zwei gegeneinander bewegbare Fangbacken 12 mit jeweils einer Bremsfläche 13, auf der keilförmige Schneiden 14 angeordnet sind (Fig. 3). Die Fangbacken 12 sind einander gegenüberliegend beiderseits des Bremsrings 9 positioniert. Hat die Gondel die gewünschte Position erreicht und soll über die Azimutbremse 4 arretiert werden, erhält ein Aktuator 11, beispielsweise ein Elektromagnet, von der Azimutsteuerung ein Signal, und der Anker des Elektromagneten drückt über ein Hebelsystem die beiden Fangbacken 12 gegen den Bremsring 9. An den beiden Längskanten der Fangbacken 12 sind Gleitleisten 15 in Hubrichtung der Fangbacken federnd gelagert. Diese Gleitleisten 15 sind, wie aus Fig. 3 und Fig. 4 erkennbar, durch Zylinderschrauben 16 und der Fangbacke 12 befestigt und werden durch Druckfedern 17 über die Höhe der Fangbacke hinausgedrückt, so dass sie permanent an den Bremsring 9 anliegen.

Zusätzlich zur Führung der Gleitleiste 15 sind Zylinderstifte 18 eingebracht. An der kurzen Stirnseite jeder Fangbacke 12 ist eine Federhalterung 19 angeordnet, an der eine für die Fangbacke 12 als Rückholfeder dienende Zugfeder 20 befestigt ist. In Fig. 3 ist ferner deutlich die V-förmige Struktur der keilförmigen Schneiden 14 zu erkennen, wobei die keilförmigen Schneiden 14 auf zwei Hälften der Bremsfläche 13 mit jeweils entgegengesetzter Ausrichtung der V-förmigen Struktur aufgeteilt sind. Auf beiden Hälften weisen die Spitzen des V's der V-förmig angeordneten keilförmigen Schneiden 14 jeweils in die Richtung der Stirnseiten der Fangbacke 12, so dass die für die Arretierung wirksamen offenen Seiten der V-förmigen Struktur genau entgegengesetzt zueinander ausgerichtet sind, wodurch für eine einzelne Fangbacke 12 eine Bremswirkung in entgegengesetzte Richtungen ermöglicht wird.

Die Funktion der Gleitleisten 15 als Schutz- und Führungsschiene besteht darin, die Bremsfläche 13 der Fangbacken 12 im Ruhezustand der Arretiervorrichtung, also wenn sich die Fangbacken 12 nicht im Eingriff mit dem Bremsring 9 befinden, vor einer Berührung mit dem Bremsring 9 und somit auch den Bremsring 9 selbst zu schützen. Sie treten quasi mit der schwimmend gelagerten Azimutbremse 4 in Wechselwirkung, d.h. bei einem möglichen Kontakt der Fangbacke 12 mit dem Bremsring 9, beispielsweise bei starken Windlasten und/oder aufgrund der gegebenen Fertigungstoleranzen der Teile der Arretiervorrichtung aber auch aufgrund von Wärmeausdehnung des verhältnismäßig großen Bremsrings 9, drücken die Gleitleisten 15 die vertikal schwimmend gelagerte Bremse in die entsprechende Richtung, wodurch der Bremsring 9 immer mittig durch die Fangbacken 12 der Azimutbremse 4 verläuft.

Die genaue Geometrie der keilförmigen Schneiden 14 ist in Fig. 5, einer Detaildarstellung C aus der Schnittdarstellung aus Fig. 4, zu erkennen. Aus dieser Darstellung ist ebenfalls zu erkennen, dass die Gleitleisten 15 über die Fangbacke 12 mit ihren keilförmigen Schneiden 14 hinausragen. Deutlich wird dies an den Höhenmaßen a und b, wobei a die Höhe der keilförmigen Schneide 14 darstellt und b der Überstand der Gleitleiste über der Fangbacke ist (b > a). Über die Abstände d und e lässt sich der Abstand der keilförmigen Schneiden 14 sowie die Breite der Schneiden 14 definieren. Je kleiner d und e werden, desto mehr keilförmige Schneiden 14 befinden sich auf der Fangbacke 12 und können beim Arretieren in den Bremsring 9 eingreifen. Je größer d und e werden, desto weniger keilförmige Schneiden 14 befinden sich auf der Fangbacke 12, wodurch weniger Kraft notwendig ist, um die keilförmigen Schneiden 14 in den Bremsring 9 eingreifen zu lassen.

Mit entscheidend für die Bremswirkung und die Arretierung ist außerdem die Geometrie der keilförmigen Schneiden 14. Wie aus Fig. 5 erkennbar, verläuft eine Flanke der Schneide senkrecht zur Bremsfläche 13, während die gegenüberliegende Flanke einen stumpfen Winkel zur Bremsfläche 13 einnimmt. Dadurch werden bei entgegengesetzten Krafteinwirkungen auf das zu arretierende Bauteil und in der Folge auf entgegengesetzte Drehrichtungen des Bremsrings 9 unterschiedliche Bremswirkungen erzielt. Die senkrecht verlaufende Flanke der keilförmigen Schneide 14, die immer auf der Innenseite des von den keilförmigen Schneiden 14 gebildeten V's angeordnet und damit der Drehrichtung des Bremsrings 9 entgegengerichtet ist, sorgt für eine verstärkte Arretierungswirkung, da die keilförmigen Schneiden 14 im arretierten Zustand in den weicheren Bremsring 9 eindringen und dies zu einem Formschluss führt, bei dem die Kräfte ungeteilt gegeneinander wirken. Bei den keilförmigen Schneiden 14 der Fangbacke 12, bei denen im arretierten Zustand die Kraft auf die im stumpfen Winkel zur Bremsfläche 13 verlaufenden Flanken der keilförmigen Schneiden 14 auftrifft, wird die Kraft in zwei senkrecht zueinanderstehende Kraftkomponenten aufgeteilt, wobei die senkrecht zur Drehrichtung des Bremsrings 9 wirkende Kraft ein Abheben der Fangbacke 12 vom Bremsring 9 bewirkt.

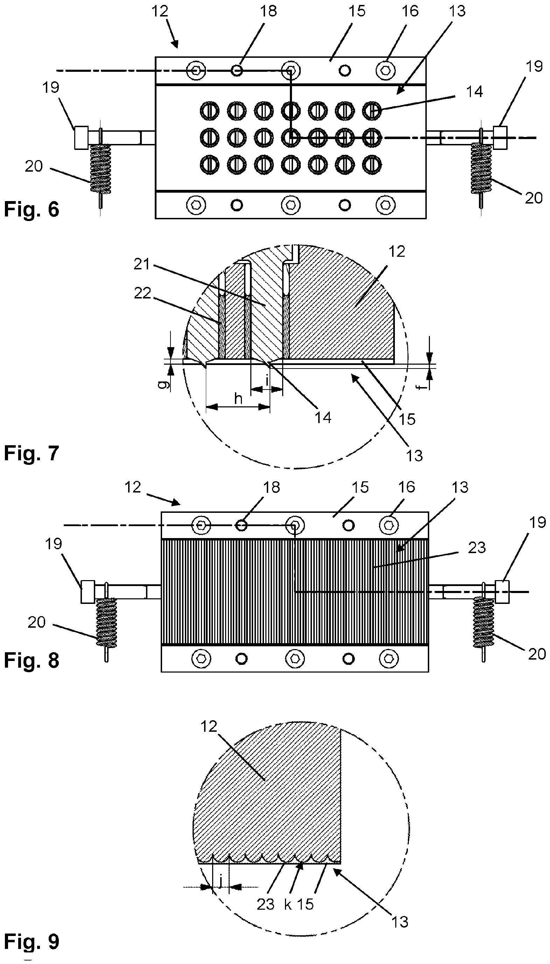

Die Fig. 6 und 7 zeigen eine Ausführungsform einer Fangbacke 12, bei der die Schneiden aus einzelnen in der Fangbacke 12 längsverschiebbaren Schneidbolzen 21 bestehen. Die Schneidbolzen 21 sind in Gleithülsen 22 gelagert und können in der Fangbacke 12 versenkt werden. Die Größe f definiert den Überstand der Schneidbolzen 21 in Bezug zu den Gleitleisten 15, g definiert den Überstand der Gleitleisten 15 über der Fangbacke 12, die Größe h definiert den Abstand zwischen den Schneidbolzen 21 in Bremsrichtung und i stellt den Durchmesser der Schneidbolzen 21 dar. Die Teile der Fangbacke 12, die bereits bei den in den vorhergehenden Zeichnungen dargestellten Fangbacken 12 beschrieben wurden und die auch die Fangbacke 12 in der in den Fig. 6 und 7 gezeigten Ausführung aufweist, wurden mit den gleichen Bezugszahlen versehen. Die Versenkbarkeit der Schneidbolzen 21 in der Fangbacke 12 hat einen ähnlichen Vorteil wie die Gleitleisten 15. Die Schneidbolzen 21 sind im nicht aktiven Zustand, also bei der Bewegung der Bauteile, durch eine Berührung mit der Bremsschiene geschützt, indem sie der Berührung der Bremsschiene ausweichen können.

Die Fig. 8 und 9 zeigen eine Fangbacke 12, deren Bremsfläche 13 durch quer zur Bremsrichtung angeordnete zylinderabschnittsförmige Bremswulste 23 gebildet wird. Die Bremswulste 23 sind zylinderabschnittsförmig ausgebildet, wobei ihre Breite in Bremsrichtung durch j definiert ist. Der Radius des Zylinderabschnitts wird über k definiert. Die zylinderabschnittsförmigen Bremswulste 23 können, anders als in Fig. 9 dargestellt, auch mit Abstand zueinander angeordnet sein, sodass sich zwischen zwei benachbarten zylinderabschnittsförmigen Bremswulsten 23 ein Freiraum befindet.

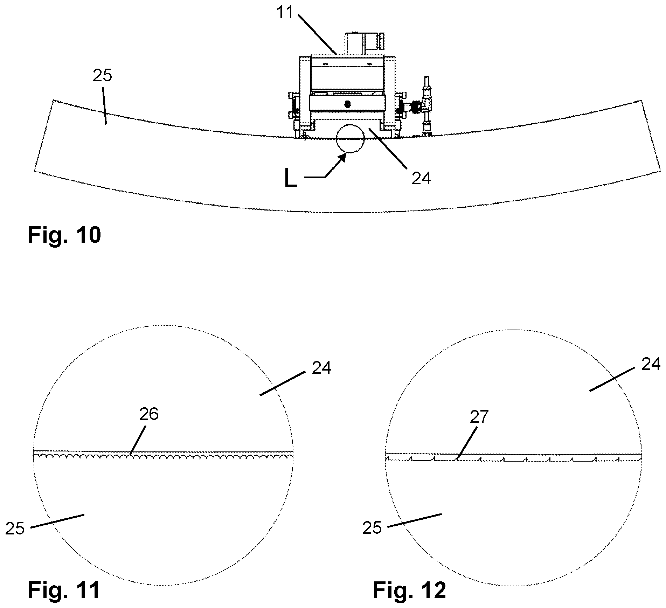

Die Fig. 10, 11 und 12 zeigen ein weiteres Ausführungsbeispiel einer erfindungsgemäßen Arretiervorrichtung in Form einer Pitchbremse für die Rotorblätter einer Windenergieanlage. Wie aus Fig. 10 erkennbar, ist die Pitchbremse ähnlich einer Trommelbremse aufgebaut, bei der sich die Fangbacke 24 innerhalb des Bremsrings 25 befindet. Bedingt durch die gekrümmte innere Mantelfläche des Bremsrings 25 muss die Bremsfläche der Fangbacke 24 in ihrer Geometrie dem inneren Radius des Bremsringes 25 entsprechen damit ein gleichmäßiges Anliegen der Fangbacke 24 an dem Bremsring 25 gewährleistet ist. Bei einem Arretier- bzw. Bremsvorgang wirkt die Bremskraft durch den Aktuator 11 über die Fangbacke 24 radial nach außen auf den Bremsring 25. Somit stellt diese Variante im Vergleich zu der zuvor beschriebenen Azimutbremse 4 eine einfach wirkende Bremse dar. Auch bei dieser Pitchbremse kann der Bremsring 25 bei feststehender Fangbacke 24 sich mit dem Bauteil bewegen oder feststehend sein, während die Fangbacke 24 mit dem Bauteil fest verbunden ist und dessen Bewegung mit ausführt.

Bei dieser Ausgestaltung weist der Innenmantel des Bremsrings 25 die für die Verstärkung der Arretierungswirkung notwendigen Mittel auf. In den Fig. 11 und 12 sind zwei mögliche Ausführungsvarianten dieser arretierenden bzw. bremsenden Mittel, wie sie bereits aus den zuvor genannten Ausführungsbeispielen bekannt sind, in einer Detailansicht L darstellt. In der in Fig. 11 dargestellten Variante weist der Bremsring 25 zylinderabschnittförmige Bremswulste 26 und in der Variante der Fig. 12 keilförmige Schneiden 27 auf. Dagegen ist die Bremsfläche der Fangbacke 24 eine ebene Fläche und besteht bei dieser Variante im Vergleich zu dem Material der Bremsfläche des Bremsrings 25 aus einem weicheren Material. Wie in den zuvor genannten Ausführungsbeispielen können auch bei dieser Ausgestaltung die bremsenden bzw. arretierenden Mittel so gestaltet und/oder angeordnet sein, dass sie in jeder Richtung der Bewegung des Bauteils eine verstärkte Arretierungswirkung aufweisen.

**Bezugszahlenliste**

| | | | |
|---|---|---|---|
| 1 | Azimutlager | 15 | Gleitleiste |
| 2 | Azimutantrieb | 16 | Zylinderschraube |
| 3 | Azimutgetriebe | 17 | Druckfeder |
| 4 | Azimutbremse | 18 | Zylinderstift |
| 5 | innerer Lagerring | 19 | Federhalterung |
| 6 | äußerer Lagerring | 20 | Zugfeder |
| 7 | Ritzel | 21 | Schneidbolzen |
| 8 | Zahnkranz | 22 | Gleithülse |
| 9 | Bremsring | 23 | zylinderabschnittsförmige Bremswulst |
| 10 | Schwimmende Lagerung | 24 | Fangbacke |
| 11 | Aktuator | 25 | Bremsring |
| 12 | Fangbacke | 26 | zylinderabschnittsförmige Bremswulst |
| 13 | Bremsfläche | 27 | keilförmige Schneide |
| 14 | keilförmige Schneide | | |
| A-A | Schnittebene mit Blickrichtung in Richtung der Pfeile | | |
| C | Detailansicht der Fangbacke | | |
| a | Höhe der keilförmigen Schneide | | |
| b | Überstand der Gleitleiste zur Fangbacke | | |
| d | Abstand von einem Schneidenfuß zum nächsten | | |
| e | Abstand von einem Schneidenfuß bis zur nächsten Schneidenschnittkante | | |
| f | Überstand der keilförmige Schneide zur Gleitleiste | | |
| g | Überstand der Gleitleiste zur Fangbacke | | |
| h | Abstand der Schneidbolzen in Bremsrichtung | | |
| i | Durchmesser des Schneidbolzens | | |
| j | Breite der zylinderabschnittsförmigen Bremswulst | | |
| k | Radius der zylinderabschnittsförmigen Bremswulst | | |
| L | Detailansicht der Pitchbremse | | |

## Patentansprüche

1. Arretiervorrichtung für dreh- und/oder verschiebbar angeordnete Bauteile, wobei die Arretiervorrichtung eine Fangbacke und eine Bremsschiene (9) aufweist und entweder die Bremsschiene (9) oder die Fangbacke (12) mit dem dreh- und/oder verschiebbar angeordneten Bauteil fest verbunden ist, wobei die Fangbacke (12) eine der Bremsschiene (9) zugewandte Bremsfläche (13) mit einem im Wesentlichen quer zur Richtung der Bewegung des Bauteils verlaufenden Bremsprofil aufweist und mit einem Aktuator (11) in Wirkverbindung steht und von diesem gegen die Bremsschiene (9) bewegbar ist, wodurch das Bremsprofil auf die Oberfläche der Bremsschiene (9) eine arretierende Wirkung ausübt, und wobei das im Wesentlichen quer zur Richtung der Bewegung des Bauteils verlaufende Bremsprofil aus mehreren in Richtung der Bewegung des Bauteils hintereinander angeordneten, im Querschnitt keilförmigen Schneiden (14) besteht, die in die Bremsschiene (9) eingreifen,
**dadurch gekennzeichnet,**
**dass** die keilförmigen Schneiden (14) einen senkrecht zur Bremsfläche (13) der Fangbacke (12) verlaufenden Schenkel aufweisen und dass dieser Schenkel bei bezüglich der Bewegung des Bauteils feststehender Fangbacke (12) der Bewegung des Bauteils entgegengerichtet ist und bei mit dem Bauteil bewegter Fangbacke (12) in Richtung der Bewegung des Bauteils weist.

2. Arretiervorrichtung nach Anspruch 1,
**dadurch gekennzeichnet,**
**dass** bei einer Teilanzahl hintereinanderliegender keilförmigen Schneiden (14) deren senkrechter Schenkel jeweils in eine Richtung weist und bei der anderen Teilanzahl der hintereinanderliegenden keilförmigen Schneiden (14) deren senkrechter Schenkel jeweils in die entgegengesetzte Richtung weist.

3. Arretiervorrichtung nach Anspruch 1 oder 2,
**dadurch gekennzeichnet,**
**dass** die keilförmigen Schneiden (14) aus mehreren einzelnen Teilschneiden (21) gebildet sind.

4. Arretiervorrichtung nach Anspruch 3,
**dadurch gekennzeichnet,**
**dass** die Teilschneiden (21) in der Fangbacke (12) längs verschiebbar angeordnet sind und die Fangbacke (12) Mittel zum Sperren der Längsverschiebbarkeit der Teilschneiden (21) aufweist.

5. Arretiervorrichtung nach einem der Ansprüche 1 bis 4,
**dadurch gekennzeichnet,**
**dass** die Bremsfläche (13) der Fangbacke (12) mit den keilförmigen Schneiden (14) aus gehärtetem Stahl besteht.

6. Arretiervorrichtung nach einem der Ansprüche 1 bis 5,
**dadurch gekennzeichnet,**
**dass** die Fangbacke (12) zweiteilig aufgebaut ist und aus einer Trägerplatte besteht, auf der die Bremsfläche (13) mit den keilförmigen Schneiden (14, 21) befestigt ist.

7. Arretiervorrichtung nach einem der Ansprüche 1 bis 6,
**dadurch gekennzeichnet,**
**dass** an den Längskanten der Fangbacke (12), an denen die keilförmigen Schneiden (14) auslaufen, jeweils eine Gleitleiste (15) in ihrer Höhe federnd gelagert angeordnet ist und mit ihrer oberen, freien Fläche an der Bremsschiene (9) anliegt, wobei die Höhe der Gleitleisten (15) so bemessen ist, dass sie in ihrer durch die Federkraft eingenommenen, von der Fangbacke (12) abgehobenen Position minimal über die freie Kante der keilförmigen Schneiden (14) überstehen und sich zwischen ihrer Unterseite und der Fangbacke (12) ein Spalt herausbildet.

8. Arretiervorrichtung für dreh- und/oder verschiebbar angeordnete Bauteile, wobei die Arretiervorrichtung eine Fangbacke und eine Bremsschiene (9) aufweist und entweder die Bremsschiene (9) oder die Fangbacke (12) mit dem dreh- und/oder verschiebbar angeordneten Bauteil fest verbunden ist, wobei die Fangbacke (12) eine der Bremsschiene (9) zugewandte Bremsfläche (13) mit einem im Wesentlichen quer zur Richtung der Bewegung des Bauteils verlaufenden Bremsprofil aufweist und mit einem Aktuator (11) in Wirkverbindung steht und von diesem gegen die Bremsschiene (9) bewegbar ist, wodurch das Bremsprofil auf die Oberfläche der Bremsschiene (9) eine arretierende Wirkung ausübt, und wobei das im Wesentlichen quer zur Richtung der Bewegung des Bauteils verlaufende Bremsprofil aus mehreren in Richtung der Bewegung des Bauteils hintereinander angeordneten, in die Bremsschiene (9) eingreifenden, im Querschnitt keilförmigen Schneiden (14) oder zylinderabschnittsförmigen Bremswulsten (23), die wulstartig aus der Bremsfläche (13) hervortreten, besteht,
**dadurch gekennzeichnet,**
**dass** die keilförmigen Schneiden (14) oder zylinderabschnittsförmigen Bremswulste (23) V-förmig auf der Bremsfläche (13) der Fangbacke (12) angeordnet sind.

9. Arretiervorrichtung nach Anspruch 8,
**dadurch gekennzeichnet,**
**dass** die Spitze des V's der V-förmig angeordneten, keilförmigen Schneiden (14) oder zylinderabschnittsförmigen Bremswulste (23) bei bezüglich der Bewegung des Bauteils feststehender Fangbacke (12) oder feststehenden Fangbacken (12) in Richtung der Bewegung des Bauteils weist oder bei mit dem Bauteil bewegter Fangbacke (12) oder bewegten Fangbacken (12) der Bewegung des Bauteils entgegengerichtet ist.

10. Arretiervorrichtung nach Anspruch 8,
**dadurch gekennzeichnet,**
**dass** bei einer Teilanzahl hintereinanderliegender, keilförmiger Schneiden (14) oder zylinderabschnittsförmigen Bremswulste (23) die Spitze des V's jeweils in ein und dieselbe Richtung weist und bei der anderen Teilanzahl der hintereinanderliegenden, keilförmigen Schneiden (14) oder zylinderabschnittsförmigen Bremswulste (23) die Spitze des V's in die entgegengesetzte Richtung weist.

11. Arretiervorrichtung nach Anspruch 8, 9 oder 10,
**dadurch gekennzeichnet,**
**dass** der in die Bremsschiene (9) eingreifende Teil der keilförmigen Schneide (14) einen senkrecht zur Bremsfläche (13) der Fangbacke (12) verlaufenden Schenkel aufweist und dass dieser Schenkel bei bezüglich der Bewegung des Bauteils feststehender Fangbacke (12) oder feststehenden Fangbacken (12) der Bewegung des Bauteils entgegengerichtet ist oder bei mit dem Bauteil bewegter Fangbacke (12) oder bewegten Fangbacken (12) in Richtung der Bewegung des Bauteils weist.

12. Arretiervorrichtung nach einem der Ansprüche 8 bis 11,
**dadurch gekennzeichnet,**
**dass** die keilförmigen Schneiden (14) aus mehreren einzelnen Teilschneiden (21) gebildet sind.

13. Arretiervorrichtung nach Anspruch 12,
**dadurch gekennzeichnet,**
**dass** die Teilschneiden (21) in der Fangbacke (12) längs verschiebbar angeordnet sind und die Fangbacke (12) Mittel zum Sperren der Längsverschiebbarkeit der Teilschneiden (21) aufweist.

14. Arretiervorrichtung nach einem der Ansprüche 8 bis 13,
**dadurch gekennzeichnet,**
**dass** die Bremsfläche (13) der Fangbacke (12) mit den keilförmigen Schneiden (14, 21) oder zylinderabschnittsförmigen Bremswulsten (23) aus gehärtetem Stahl besteht.

15. Arretiervorrichtung nach einem der Ansprüche 8 bis 14,
**dadurch gekennzeichnet,**
**dass** die Fangbacke (12) zweiteilig aufgebaut ist und aus einer Trägerplatte besteht, auf der die Bremsfläche (13) mit den keilförmigen Schneiden (14, 21) oder zylinderabschnittsförmigen Bremswulsten (23) befestigt ist.

16. Arretiervorrichtung nach einem der Ansprüche 8 bis 15,
**dadurch gekennzeichnet,**
**dass** an den Längskanten der Fangbacke (12), an denen die keilförmigen Schneiden (14) oder zylinderabschnittsförmigen Bremswulste (23) auslaufen, jeweils eine Gleitleiste (15) in ihrer Höhe federnd gelagert angeordnet ist und mit ihrer oberen, freien Fläche an der Bremsschiene (9) anliegt, wobei die Höhe der Gleitleisten (15) so bemessen ist, dass sie in ihrer durch die Federkraft eingenommenen, von der Fangbacke (12) abgehobenen Position minimal über die freie Kante der keilförmigen Schneiden (14) oder die wulstartig aus der Bremsfläche (13) hervortretenden, zylinderabschnittsförmigen Bremswulste (23) überstehen und sich zwischen ihrer Unterseite und der Fangbacke (12) ein Spalt herausbildet.

17. Arretiervorrichtung für dreh- und/oder verschiebbar angeordnete Bauteile, bestehend aus mindestens einer Fangbacke (12) und einer Bremsschiene (9), wobei entweder die Bremsschiene (9) oder die Fangbacke (12) mit dem dreh- und/oder verschiebbar angeordneten Bauteil fest verbunden ist und wobei die Fangbacke (12) eine der Bremsschiene (9) zugewandte Bremsfläche (13) mit einem im Wesentlichen quer zur Richtung der Bewegung des Bauteils verlaufenden Bremsprofil aufweist und mit einem Aktuator (11) in Wirkverbindung steht und von diesem gegen die Bremsschiene (9) bewegbar ist, wodurch das Bremsprofil auf die Oberfläche der Bremsschiene (9) eine arretierende Wirkung ausübt,
**dadurch gekennzeichnet,**
**dass** die Arretiervorrichtung mindestens zwei in Richtung der Bewegung der Bauteile hintereinander angeordnete Fangbacken (12) mit den Merkmalen einer der Ansprüche 1, 3 bis 7 oder 8, 9, 11 bis 16 aufweist, wobei die mindestens zwei Fangbacken (12) so in der Arretiervorrichtung angeordnet sind, dass das oder die in den genannten Ansprüchen beanspruchten, die arretierende Wirkung bestimmenden Merkmale der Bremsprofile jeweils in entgegengesetzter Richtung ausgebildet sind, so dass die mindestens eine Fangbacke (12) in die eine Richtung der Bewegung des Bauteils und die mindestens zweite Fangbacke (12) in die entgegengesetzte Richtung der Bewegung des Bauteils ihre volle arretierende Wirkung entfaltet.

18. Arretiervorrichtung für dreh- und/oder verschiebbar angeordnete Bauteile, bestehend aus mindestens einer Fangbacke (12) und einer Bremsschiene (9), wobei entweder die Bremsschiene (9) oder die Fangbacke (12) mit dem dreh- und/oder verschiebbar angeordneten Bauteil fest verbunden ist und wobei die Fangbacke (12) eine der Bremsschiene (9) zugewandte Bremsfläche (13) mit einem im Wesentlichen quer zur Richtung der Bewegung des Bauteils verlaufenden Bremsprofil aufweist und mit einem Aktuator (11) in Wirkverbindung steht und von diesem gegen die Bremsschiene (9) bewegbar ist, wodurch das Bremsprofil auf die Oberfläche der Bremsschiene (9) eine arretierende Wirkung ausübt,
**dadurch gekennzeichnet,**
**dass** die Arretiervorrichtung mindestens eine Fangbacke (12) mit den Merkmalen der Ansprüche 1 und 2 oder 8 und 10 aufweist, wobei das oder die in den genannten Ansprüchen beanspruchten, die arretierende Wirkung bestimmenden Merkmale der Bremsprofile der mindestens einen Fangbacke (12) jeweils hälftig in entgegengesetzter Richtung ausgebildet sind, so dass die mindestens eine Fangbacke (12) in beiden Richtungen der Bewegung des Bauteils ihre volle arretierende Wirkung entfaltet.

19. Arretiervorrichtung nach Anspruch 17 oder 18,
**dadurch gekennzeichnet,**
**dass** die Bremsschiene (9) aus einem weicheren Material als dem, welches das Bremsprofil der Fangbacke (12) bildet, besteht.

20. Arretiervorrichtung nach Anspruch 19,
**dadurch gekennzeichnet,**
**dass** das Material der Bremsschiene (9) aus einem Knetmetall besteht.

21. Arretiervorrichtung für dreh- und/oder verschiebbar angeordnete Bauteile, bestehend aus mindestens einer Fangbacke (24) und einer Bremsschiene (25), wobei entweder die Bremsschiene (25) oder die Fangbacke (24) mit dem dreh- und/oder verschiebbar angeordneten Bauteil fest verbunden ist und wobei die Fangbacke (24) eine der Bremsschiene (25) zugewandte Bremsfläche aufweist und mit einem Aktuator (11) in Wirkverbindung steht und von diesem gegen die Bremsschiene (25) bewegbar ist, wodurch die Bremsfläche auf die Oberfläche der Bremsschiene (25) eine arretierende Wirkung ausübt, wobei die Bremsschiene (25) der Arretiervorrichtung ein im Wesentlichen quer zur Richtung der Bewegung des Bauteils verlaufendes Bremsprofil aufweist,
**dadurch gekennzeichnet,**
**dass** das Bremsprofil aus in Richtung der Bewegung des Bauteils hintereinander angeordneten, im Querschnitt keilförmigen Schneiden (27) oder wulstartig aus der Bremsschiene (25) hervortretenden zylinderabschnittsförmigen Bremswulsten (26) besteht und die keilförmigen Schneiden (27) oder zylinderabschnittsförmigen Bremswulste (26) V-förmig auf der Bremsschiene (25) angeordnet sind.

22. Arretiervorrichtung nach Anspruch 21,
**dadurch gekennzeichnet,**
**dass** die Bremsschiene (25) in mindestens zwei Bereiche aufgeteilt ist, in denen bei einer Teilanzahl der hintereinander angeordneten, keilförmigen Schneiden (27) oder zylinderabschnittsförmigen Bremswulste (26) die Spitze des V's jeweils in ein und dieselbe Richtung weist und bei der anderen Teilanzahl der hintereinander angeordneten keilförmigen Schneiden (27) oder zylinderabschnittsförmigen Bremswulste (26) die Spitze des V's jeweils in die entgegengesetzte Richtung weist und dass jedem Bereich einer Teilzahl jeweils mindestens eine Fangbacke (24) gegenüberliegend angeordnet ist.

23. Arretiervorrichtung nach Anspruch 21 oder 22,
**dadurch gekennzeichnet, dass** die Bremsschiene (25) aus einem härteren Material als die Bremsfläche der Fangbacke (24) besteht.

## Claims

1. Locking device for rotatably and/or displaceably arranged components, whereby the locking device has a catching jaw and a brake rail (9) and either the brake rail (9) or the catching jaw (12) is fixedly connected to the rotatably and/or displaceably arranged component, whereby the catching jaw (12) has a brake surface (13), which faces the brake rail (9), with a brake profile running largely transversely to the direction of movement of the component and stands in operative connection with an actuator (11) and can be moved by the latter against the brake rail (9), whereby the brake profile exerts a locking effect on the surface of the brake rail (9), and whereby the brake profile running largely transversely to the direction of movement of the component consists of a plurality of cutting edges (14) with a wedge-shaped cross section arranged one behind the other in the direction of movement of the component that engage with the brake rail (9),
**characterised in that**,
the wedge-shaped cutting edges (14) have a side running perpendicular to the brake surface (13) of the catching jaw (12) and that this side is directed oppositely to the movement of the component in the case of the catching jaw (12) being fixed in relation to the movement of the component and points in the direction of movement of the component in the case of the catching jaw (12) moving with the component.

2. Locking device in accordance with Claim 1,
**characterised in that**,
in the case of a partial number of the wedge-shaped cutting edges (14) arranged one behind the other, the vertical side of which always points in one direction, and in the case of the other partial number of the wedge-shaped cutting edges (14) arranged one behind the other, the vertical side of which always points in the opposite direction.

3. Locking device in accordance with Claim 1 or 2,
**characterised in that**,
the wedge-shaped cutting edges (14) are formed of a plurality of individual partial cutting edges (21).

4. Locking device in accordance with Claim 3,
**characterised in that**,
the partial cutting edges (21) in the catching jaw (12) are arranged as longitudinally displaceable and the catching jaw (12) has means for blocking the longitudinal displaceability of the partial cutting edges (21).

5. Locking device in accordance with one of the Claims 1 to 4,
**characterised in that**,
the brake surface (13) of the catching jaw (12) with the wedge-shaped cutting edges (14) consists of hardened steel.

6. Locking device in accordance with one of the Claims 1 to 5,
**characterised in that**,
the catching jaw (12) is constructed of two parts and consists of a support plate onto which the brake surface (13) with the wedge-shaped cutting edges (14, 21) is fastened.

7. Locking device in accordance with one of the Claims 1 to 6,
**characterised in that**,
on each of the longitudinal edges of the catching jaw (12), at which the wedge-shaped cutting edges (14) end, a sliding strip (15) is disposed as spring mounted in its height and with its upper, free surface lying on the brake rail (9), whereby the height of the sliding strips (15) is so dimensioned that in their position raised from the catching jaw (12) by the spring force they project minimally above the free edge of the wedge-shaped cutting edges (14) and a gap is created between their underside and the catching jaw (12).

8. Locking device for rotatably and/or displaceably arranged components, whereby the locking device has a catching jaw and a brake rail (9) and either the brake rail (9) or the catching jaw (12) is fixedly connected to the rotatably and/or displaceably arranged component, whereby the catching jaw (12) has a brake surface (13), which faces the brake rail (9), with a brake profile running largely transversely to the direction of movement of the component and stands in operative connection with an actuator (11) and can be moved by the latter against the brake rail (9), whereby the brake profile exerts a locking effect on the surface of the brake rail (9), and whereby the brake profile running largely transversely to the direction of movement of the component consists of a plurality of cutting edges (14) with a wedge-shaped cross section or cylindrical cross section-shaped brake beads (23) protruding bead-like out of the brake surface (13) arranged one behind the other in the direction of movement of the component that engage with the brake rail (9),
**characterised in that**,
the wedge-shaped cutting edges (14) or brake beads (23) with a cylindrical cross section are arranged in a V-shaped manner on the brake surface (13) of the catching jaw (12).

9. Locking device in accordance with Claim 8,
**characterised in that**,
the tip of the V of the V-shaped arrangement of the wedge-shaped cutting edges (14) or cylindrical cross section-shaped brake beads (23) in the case of the catching jaw (12) or catching jaws (12) being fixed in relation to the movement of the component points in the direction of movement of the component or in the case of a moving catching jaw (12) or moving catching jaws (12) is directed oppositely to the direction of movement of the component.

10. Locking device in accordance with Claim 8,
**characterised in that**,
in the case of a partial number of wedge-shaped cutting edges (14) or cylindrical cross section-shaped brake beads (23) arranged one behind the other, the tip of the V always points in one and the same direction, and in the case of the other partial number of the wedge-shaped cutting edges (14) or cylindrical cross section-shaped brake beads (23) arranged one behind the other, the tip of the V points in the opposite direction.

11. Locking device in accordance with Claim 8, 9 or 10,
**characterised in that**,
the part of the wedge-shaped cutting edge (14) engaging with the brake rail (9) has a side running perpendicular to the brake surface (13) of the catching jaw (12) and that this side is arranged oppositely to the movement of the component in the case of the catching jaw (12) or catching jaws (12) being fixed in relation to the movement of the component or arranged as pointing in the direction of movement of the component in the case of the catching jaw (12) or catching jaws (12) moving with the component.

12. Locking device in accordance with one of the Claims 8 to 11,
**characterised in that**,
the wedge-shaped cutting edges (14) are formed of a plurality of individual partial cutting edges (21).

13. Locking device in accordance with Claim 12,
**characterised in that**,
the partial cutting edges (21) in the catching jaw (12) are arranged as longitudinally displaceable and the catching jaw (12) has means for blocking the longitudinal displaceability of the partial cutting edges (21).

14. Locking device in accordance with one of the Claims 8 to 13,
**characterised in that**,
the brake surface (13) of the catching jaw (12) with the wedge-shaped cutting edges (14, 21) or cylindrical cross section-shaped brake beads (23) consists of hardened steel.

15. Locking device in accordance with one of the Claims 8 to 14,
**characterised in that**,
the catching jaw (12) is constructed of two parts and consists of a support plate onto which the brake surface (13) with the wedge-shaped cutting edges (14, 21) or cylindrical cross section-shaped brake beads (23) is fastened.

16. Locking device in accordance with one of the Claims 8 to 15,
**characterised in that**,
on each of the longitudinal edges of the catching jaw (12) at which the wedge-shaped cutting edges (14) or cylindrical cross section-shaped brake beads (23) end, a sliding strip (15) is disposed as spring mounted in its height and with its upper, free surface lying on the brake rail (9), whereby the height of the sliding strips (15) is so dimensioned that in their position raised from the catching jaw (12) by the spring force they project minimally above the free edge of the wedge-shaped cutting edges (14) or the cylindrical cross section-shaped brake beads (23) protruding bead-like from the brake surface (13) and a gap is created between their underside and the catching jaw (12).

17. Locking device for rotatably and/or displaceably arranged components, consisting of at least one catching jaw (12) and one brake rail (9), whereby either the brake rail (9) or the catching jaw (12) is fixedly connected to the rotatably and/or displaceably arranged component and whereby the catching jaw (12) has a brake surface (13), which faces the brake rail (9), with a brake profile running largely transversely to the direction of movement of the component and stands in operative connection with an actuator (11) and can be moved by the latter against the brake rail (9), whereby the brake profile exerts a locking effect on the surface of the brake rail (9),
**characterised in that**,
the locking device has at least two catching jaws (12) arranged one behind the other in the direction of movement of the components with the features of one of the claims 1, 3 to 7 or 8, 9, 11 to 16, whereby the at least two catching jaws (12) are arranged in the locking device such that the feature or features of the brake profiles determining the locking effect in the above cited claims are always arranged in the opposing direction, so that the at least one catching jaw (12) develops its full locking effect in the one direction of movement of the component and the at least second catching jaw (12) develops its full locking effect in the opposite direction to the movement of the component.

18. Locking device for rotatably and/or displaceably arranged components, consisting of at least one catching jaw (12) and one brake rail (9), whereby either the brake rail (9) or the catching jaw (12) is fixedly connected to the rotatably and/or displaceably arranged component and whereby the catching jaw (12) has a brake surface (13), which faces the brake rail (9), with a brake profile running largely transversely to the direction of movement of the component and stands in operative connection with an actuator (11) and can be moved by the latter against the brake rail (9), whereby the brake profile exerts a locking effect on the surface of the brake rail (9),
**characterised in that**,
the locking device has at least one catching jaw (12) with the features of claims 1 and 2 or 8 and 10, whereby the feature or features determining the locking effect in the above cited claims of the brake profiles of at least one catching jaw (12) are each formed half in the opposite direction so that at least one catching jaw (12) develops its full locking effect in both directions of movement of the component.

19. Locking device in accordance with Claim 17 or 18,
**characterised in that**,
the brake rail (9) consists of a softer material than the brake profile of the catching jaw (12).

20. Locking device in accordance with Claim 19,
**characterised in that**,
the material of the brake rail (9) consists of a kneading metal.

21. Locking device for rotatably and/or displaceably arranged components, consisting of at least one catching jaw (24) and one brake rail (25), whereby either the brake rail (25) or the catching jaw (24) is fixedly connected to the rotatably and/or displaceably arranged component and whereby the catching jaw (24) has a brake surface facing the brake rail (25) and stands in operative connection with an actuator (11) and can be moved by the latter against the brake rail (25), whereby the brake surface exerts a locking effect on the surface of the brake rail (25), whereby the brake rail (25) of the locking device has a brake profile running largely transversely to the direction of movement of the component,
**characterised in that**,
the brake profile consists of wedge-shaped cutting edges (27) or cylindrical cross section-shaped brake beads (26) protruding bead-like out of the brake rail (25) arranged one behind the other in the direction of movement of the component and the wedge-shaped cutting edges (27) or cylindrical cross section-shaped brake beads (26) are arranged in a V shape on the brake rail (25).

22. Locking device in accordance with Claim 21,
**characterised in that**,
the brake rail (25) is divided into at least two areas in which in the case of a partial number of wedge-shaped cutting edges (27) or cylindrical cross section-shaped brake beads (26) arranged one behind the other, the tip of the V always points in one and the same direction and in the case of the other partial number of wedge-shaped cutting edges (27) or cylindrical cross section-shaped brake beads (26) arranged one behind the other, the tip of the V always points in the opposite direction and that at least one catching jaw (24) is arranged oppositely to each area of a partial number.

23. Locking device in accordance with Claim 21 or 22,
**characterised in that** the brake rail (25) consists of a harder material than the brake surface of the catching jaw (24).

## Revendications

1. Dispositif de blocage pour éléments pivotants et/ou coulissants, le dispositif de blocage présentant une mâchoire d'arrêt et un rail de freinage (9) et le rail de freinage (9) ou la mâchoire d'arrêt (12) étant solidairement relié à l'élément pivotant et/ou coulissant, la mâchoire d'arrêt (12) présentant une surface de freinage (13) tournée vers le rail de freinage (9), avec un profil de freinage s'étendant essentiellement transversalement au sens du déplacement de l'élément, et étant en liaison active avec un actionneur (11) et déplaçable par celui-ci contre le rail de freinage (9), le profil de freinage exerçant une action de blocage sur la surface du rail de freinage (9), et le profil de freinage s'étendant essentiellement transversalement au sens du déplacement de l'élément, se composant de plusieurs arêtes cunéiformes (14) en section, disposées les unes derrière les autres dans le sens du déplacement de l'élément, lesquelles sont en prise dans le rail de freinage (9),
**caractérisé en ce que**
les arêtes cunéiformes (14) présentent un côté s'étendant perpendiculairement à la surface de freinage (13) de la mâchoire d'arrêt (12) et **en ce que** ce côté est opposé au déplacement de l'élément quand la mâchoire d'arrêt (12) est fixe par rapport au déplacement de l'élément et est tourné dans le sens du déplacement de l'élément quand la mâchoire d'arrêt (12) est déplacée avec l'élément.

2. Dispositif de blocage conformément à la revendication 1,
**caractérisé en ce que**,
pour un nombre partiel d'arêtes cunéiformes (14) les unes derrière les autres, le côté perpendiculaire de celles-ci est respectivement tourné dans un sens et, pour l'autre nombre partiel d'arêtes cunéiformes (14) les unes derrière les autres, le côté perpendiculaire de celles-ci est respectivement tourné dans le sens opposé.

3. Dispositif de blocage conformément à la revendication 1 ou 2,
**caractérisé en ce que**
les arêtes cunéiformes (14) sont formées de plusieurs arêtes partielles (21) individuelles.

4. Dispositif de blocage conformément à la revendication 3,
**caractérisé en ce que**
les arêtes partielles (21) sont coulissantes en longueur dans la mâchoire d'arrêt (12) et la mâchoire d'arrêt (12) présente des moyens de blocage du coulissement longitudinal des arêtes partielles (21).

5. Dispositif de blocage conformément à l'une des revendications 1 à 4,
**caractérisé en ce que**
la surface de freinage (13) de la mâchoire d'arrêt (12) avec les arêtes cunéiformes (14) est en acier trempé.

6. Dispositif de blocage conformément à l'une des revendications 1 à 5,
**caractérisé en ce que**
la mâchoire d'arrêt (12) est conçue en deux parties et se compose d'une plaque support sur laquelle la surface de freinage (13) est fixée avec les arêtes cunéiformes (14, 21).

7. Dispositif de blocage conformément à l'une des revendications 1 à 6,
**caractérisé en ce que**,
sur chacun des bords longitudinaux de la mâchoire d'arrêt (12), sur lesquels s'étendent les arêtes cunéiformes (14), une glissière (15) est respectivement montée sur ressort dans sa hauteur et affleure, avec sa face supérieure libre, le rail de freinage (9), la hauteur des glissières (15) étant dimensionnée de telle manière à franchir légèrement, dans leur position relevée par la mâchoire d'arrêt (12), prise par la force du ressort, le bord libre des arêtes cunéiformes (14) et à former une fente entre leur face inférieure et la mâchoire d'arrêt (12).

8. Dispositif de blocage pour éléments pivotants et/ou coulissants, le dispositif de blocage présentant une mâchoire d'arrêt et un rail de freinage (9) et le rail de freinage (9) ou la mâchoire d'arrêt (12) étant solidairement relié à l'élément pivotant et/ou coulissant, la mâchoire d'arrêt (12) présentant une surface de freinage (13) tournée vers le rail de freinage (9), avec un profil de freinage s'étendant essentiellement transversalement au sens du déplacement de l'élément, et étant en liaison active avec un actionneur (11) et déplaçable par celui-ci contre le rail de freinage (9), le profil de freinage exerçant une action de blocage sur la surface du rail de freinage (9), et le profil de freinage s'étendant essentiellement transversalement au sens du déplacement de l'élément, se composant de plusieurs arêtes cunéiformes (14) en section, en prise dans le rail de freinage (9) et disposées les unes derrière les autres dans le sens du déplacement de l'élément, ou joncs de freinage en forme de section cylindrique (23), lesquels émergent en forme de bourrelet de la surface de freinage (13),
**caractérisé en ce que**
les arêtes cunéiformes (14) ou joncs de freinage en forme de section cylindrique (23) sont disposés en V sur la surface de freinage (13) de la mâchoire d'arrêt (12).

9. Dispositif de blocage conformément à la revendication 8,
**caractérisé en ce que**
la pointe du V des arêtes cunéiformes (14) ou joncs de freinage en forme de section cylindrique (23), disposés en V, est tournée dans le sens du déplacement de l'élément quand la mâchoire d'arrêt (12) est fixe ou les mâchoires d'arrêt (12) sont fixes par rapport au déplacement de l'élément ou est opposée au déplacement de l'élément quand la mâchoire d'arrêt (12) est déplacée ou les mâchoires d'arrêt (12) sont déplacées avec l'élément.

10. Dispositif de blocage conformément à la revendication 8,
**caractérisé en ce que**,
pour un nombre partiel d'arêtes cunéiformes (14) les unes derrière les autres ou de joncs de freinage en forme de section cylindrique (23), la pointe du V est respectivement tournée dans un seul et même sens et, pour l'autre nombre partiel d'arêtes cunéiformes (14) les unes derrière les autres ou de joncs de freinage en forme de section cylindrique (23), la pointe du V est tournée dans le sens opposé.

11. Dispositif de blocage conformément à la revendication 8, 9 ou 10,
**caractérisé en ce que**
la partie de l'arête cunéiforme (14), en prise dans le rail de freinage (9), présente un côté s'étendant perpendiculairement à la surface de freinage (13) de la mâchoire d'arrêt (12) et **en ce que** ce côté est opposé au déplacement de l'élément quand la mâchoire d'arrêt (12) est fixe ou les mâchoires d'arrêt (12) sont fixes par rapport au déplacement de l'élément ou est tourné dans le sens du déplacement de l'élément quand la mâchoire d'arrêt (12) est déplacée ou les mâchoires d'arrêt (12) sont déplacées avec l'élément.

12. Dispositif de blocage conformément à l'une des revendications 8 à 11,
**caractérisé en ce que**
les arêtes cunéiformes (14) sont formées de plusieurs arêtes partielles (21) individuelles.

13. Dispositif de blocage conformément à la revendication 12,
**caractérisé en ce que**
les arêtes partielles (21) sont coulissantes en longueur dans la mâchoire d'arrêt (12) et la mâchoire d'arrêt (12) présente des moyens de blocage du coulissement longitudinal des arêtes partielles (21).

14. Dispositif de blocage conformément à l'une des revendications 8 à 13,
**caractérisé en ce que**
la surface de freinage (13) de la mâchoire d'arrêt (12) avec les arêtes cunéiformes (14, 21) ou joncs de freinage en forme de section cylindrique (23) sont en acier trempé.

15. Dispositif de blocage conformément à l'une des revendications 8 à 14,
**caractérisé en ce que**
la mâchoire d'arrêt (12) est conçue en deux parties et se compose d'une plaque support sur laquelle la surface de freinage (13) est fixée avec les arêtes cunéiformes (14, 21) ou joncs de freinage en forme de section cylindrique (23).

16. Dispositif de blocage conformément à l'une des revendications 8 à 15,
**caractérisé en ce que**,
sur chacun des bords longitudinaux de la mâchoire d'arrêt (12), sur lesquels s'étendent les arêtes cunéiformes (14) ou joncs de freinage en forme de section cylindrique (23), une glissière (15) est respectivement montée sur ressort dans sa hauteur et affleure, avec sa face supérieure libre, le rail de freinage (9), la hauteur des glissières (15) étant dimensionnée de telle manière à franchir légèrement, dans leur position relevée par la mâchoire d'arrêt (12), prise par la force du ressort, le bord libre des arêtes cunéiformes (14) ou les joncs de freinage en forme de section cylindrique (23) émergeant en forme de bourrelet de la surface de freinage (13) et à former une fente entre leur face inférieure et la mâchoire d'arrêt (12).

17. Dispositif de blocage pour éléments pivotants et/ou coulissants, se composant au moins d'une mâchoire d'arrêt (12) et d'un rail de freinage (9), le rail de freinage (9) ou la mâchoire d'arrêt (12) étant solidairement relié à l'élément pivotant et/ou coulissant, et la mâchoire d'arrêt (12) présentant une surface de freinage (13) tournée vers le rail de freinage (9), avec un profil de freinage s'étendant essentiellement transversalement au sens du déplacement de l'élément, et étant en liaison active avec un actionneur (11) et déplaçable par celui-ci contre le rail de freinage (9), le profil de freinage exerçant une action de blocage sur la surface du rail de freinage (9),
**caractérisé en ce que**
le dispositif de blocage présente au moins deux mâchoires d'arrêt (12) disposées les unes derrière les autres dans le sens du déplacement des éléments, avec les caractéristiques de l'une des revendications 1, 3 à 7 ou 8, 9, 11 à 16, au moins les deux mâchoires d'arrêt (12) étant disposées dans le dispositif de blocage de telle manière à ce que la ou les caractéristiques des profils de freinage déterminant l'action de blocage, visées dans les revendications mentionnées, soient respectivement formées dans le sens opposé de telle manière à ce qu'au moins une mâchoire d'arrêt (12) déploie pleinement son action de blocage dans un sens du déplacement de l'élément et au moins la deuxième mâchoire d'arrêt (12) dans le sens opposé du déplacement de l'élément.

18. Dispositif de blocage pour éléments pivotants et/ou coulissants, se composant au moins d'une mâchoire d'arrêt (12) et d'un rail de freinage (9), le rail de freinage (9) ou la mâchoire d'arrêt (12) étant solidairement relié à l'élément pivotant et/ou coulissant, et la mâchoire d'arrêt (12) présentant une surface de freinage (13) tournée vers le rail de freinage (9), avec un profil de freinage s'étendant essentiellement transversalement au sens du déplacement de l'élément, et étant en liaison active avec un actionneur (11) et déplaçable par celui-ci contre le rail de freinage (9), le profil de freinage exerçant une action de blocage sur la surface du rail de freinage (9),
**caractérisé en ce que**
le dispositif de blocage présente au moins une mâchoire d'arrêt (12) avec les caractéristiques des revendications 1 et 2 ou 8 et 10, la ou les caractéristiques des profils de freinage déterminant l'action de blocage, visées dans les revendications mentionnées, pour au moins une mâchoire d'arrêt (12), étant formées respectivement par moitié dans le sens opposé de telle manière à ce qu'au moins une mâchoire d'arrêt (12) déploie pleinement son action de blocage dans les deux sens du déplacement de l'élément.

19. Dispositif de blocage conformément à la revendication 17 ou 18,
**caractérisé en ce que**
le rail de freinage (9) se compose d'un matériau plus mou que celui qui constitue le profil de freinage de la mâchoire d'arrêt (12).

20. Dispositif de blocage conformément à la revendication 19,
**caractérisé en ce que**
le matériau du rail de freinage (9) se compose d'un métal forgé.

21. Dispositif de blocage pour éléments pivotants et/ou coulissants, se composant au moins d'une mâchoire d'arrêt (24) et d'un rail de freinage (25), le rail de freinage (25) ou la mâchoire d'arrêt (24) étant solidairement relié à l'élément pivotant et/ou coulissant, et la mâchoire d'arrêt (24) présentant une surface de freinage tournée vers le rail de freinage (25), et étant en liaison active avec un actionneur (11) et déplaçable par celui-ci contre le rail de freinage (25), la surface de freinage exerçant une action de blocage sur la surface du rail de freinage (25), le rail de freinage (25) du dispositif de blocage présentant un profil de freinage s'étendant essentiellement transversalement au sens du déplacement de l'élément,
**caractérisé en ce que**
le profil de freinage se compose d'arêtes cunéiformes (27) en section, disposées les unes derrière les autres dans le sens du déplacement de l'élément, ou de joncs de freinage en forme de section cylindrique (26) émergeant en forme de bourrelet du rail de freinage (25), et **en ce que** les arêtes cunéiformes (27) ou joncs de freinage en forme de section cylindrique (26) sont disposés en V sur le rail de freinage (25).

22. Dispositif de blocage conformément à la revendication 21,
**caractérisé en ce que**
le rail de freinage (25) est réparti au moins en deux zones, dans lesquelles, pour un nombre partiel d'arêtes cunéiformes (27) disposées les unes derrière les autres ou de joncs de freinage en forme de section cylindrique (26), la pointe du V est respectivement tournée dans un seul et même sens et, pour l'autre nombre partiel d'arêtes cunéiformes (27) disposées les unes derrière les autres ou de joncs de freinage en forme de section cylindrique (26), la pointe du V est respectivement tournée dans le sens opposé et **en ce qu'**au moins une mâchoire d'arrêt (24) est respectivement opposée à chaque zone d'un nombre partiel.

23. Dispositif de blocage conformément à la revendication 21 ou 22,
**caractérisé en ce que** le rail de freinage (25) se compose d'un matériau plus dur que la surface de freinage de la mâchoire d'arrêt (24).
